(19) Europäisches Patentamt
European Patent Office
Office européen des brevets

(11) **EP 2 884 459 A1**

(12) **EUROPEAN PATENT APPLICATION**
published in accordance with Art. 153(4) EPC

(43) Date of publication:
**17.06.2015 Bulletin 2015/25**

(51) Int Cl.:
***G06T 7/00*** *(2006.01)*

(21) Application number: **13827663.9**

(22) Date of filing: **06.08.2013**

(86) International application number:
**PCT/JP2013/071196**

(87) International publication number:
**WO 2014/024854 (13.02.2014 Gazette 2014/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.08.2012 JP 2012178619**

(71) Applicant: **Konica Minolta, Inc.**
**Tokyo 100-7015 (JP)**

(72) Inventor: **SUMITOMO, Hironori**
**Tokyo 100-7015 (JP)**

(74) Representative: **Hoffmann Eitle**
**Patent- und Rechtsanwälte PartmbB**
**Arabellastraße 30**
**81925 München (DE)**

(54) **IMAGE PROCESSING DEVICE, IMAGE PROCESSING METHOD, AND IMAGE PROCESSING PROGRAM**

(57) An image processing apparatus having a function to generate a template used for search for an object in an input image is provided. The image processing apparatus includes a first image obtaining portion that obtains a first input image including the object, a second image obtaining portion that obtains a second input image including the object, in which position information of the object within the second input image has already been known, a template candidate setting portion that divides a candidate region which is set in the first input image so as to include the object into a plurality of sub regions and sets a plurality of rectangular template candidates each consisting of a single sub region or a plurality of sub regions adjacent to one another, a calculation portion that performs processing for searching for the object by using each template candidate in the second input image and calculates search accuracy of each template candidate based on a result of performed search processing, and a generation portion that selects a plurality of partial templates from among the plurality of template candidates based on the search accuracy and a size of each template candidate to generate a set of selected partial templates as the template.

FIG.4

**Description**

TECHNICAL FIELD

The present invention relates to an image processing apparatus, an image processing method, and an image processing program for generating a template used for search for an object included in an input image.

BACKGROUND ART

Various techniques for processing for searching for an object in an image (matching processing) have conventionally been proposed.

For example, Japanese Laid-Open Patent Publication No. 06-317406 (PTD 1) discloses an apparatus for detecting a position of an article. This position detection apparatus detects a position of a detection target site by scanning a picture obtained by image pick-up of the detection target site with a template having a pattern corresponding to a shape of the detection target site and then performing matching. In particular, with this position detection apparatus, a plurality of templates having patterns corresponding to shapes of portions obtained at the time when a shape of the detection target site is divided into a plurality of pieces are set, these templates and an image of a corresponding portion of the detection target site are subjected to matching, and a position of the detection target site as a whole is found from the results.

Japanese Laid-Open Patent Publication No. 06-089343 (PTD 2) discloses a method of setting a dead zone region in template matching. In this method of setting a dead zone region, a template image and an image of a detected object are stored, the stored template image and the image of the detected object are divided into partial images, the partial images are subjected to template matching processing, and a partial image region of the template image is defined as a dead zone region when a correlation value is lower than a prescribed value.

In some matching processing, frequency information of an image is used, and for example, phase-only correlation (hereinafter also denoted as "POC") has been known. In this POC, corresponding points between images are searched for with the use of phase difference information of a spatial frequency included in the images, and POC is excellent in robustness. When a difference in magnification and/or rotation is present between two images to be searched, POC adapted to a size and/or rotation, such as rotation invariant phase only correlation (hereinafter also denoted as "RIPOC"), is used as an approach as an expansion of POC. Japanese Laid-Open Patent Publication No. 10-124667 (PTD 3) discloses a pattern collation apparatus making use of RIPOC. This pattern collation apparatus collates an N-dimensional pattern (such as a fingerprint (two-dimensional) and a solid (three-dimensional)) based on spatial frequency characteristics, and it aims to allow identification as to whether or not a registered pattern and a collation pattern are the same in spite of presence of deviation in rotation.

CITATION LIST

PATENT DOCUMENT

PTD 1: Japanese Laid-Open Patent Publication No. 06-317406
PTD 2: Japanese Laid-Open Patent Publication No. 06-089343
PTD 3: Japanese Laid-Open Patent Publication No. 10-124667

SUMMARY OF INVENTION

TECHNICAL PROBLEM

A template used for matching processing as described above is an image corresponding to a part or the entirety of an object included in an input image. For example, in a case that an object includes a movable portion and the template is an image including the movable portion, however, matching processing may not be performed well when the movable portion of the object in the input image is not at a position similar to a position in the template. In order to address such a situation, Japanese Laid-Open Patent Publication No. 06-317406 (PTD 1) or Japanese Laid-Open Patent Publication No. 06-089343 (PTD 2) disclose division of a template into a plurality of partial regions or setting of a dead zone region, however, application of such techniques as they are to matching processing using frequency information of an image cannot bring about sufficient search accuracy. Namely, though a size or a shape of a template affects search accuracy in matching processing using frequency information of an image, the documents described above do not take into such an aspect at all.

An object of the present invention is to provide an image processing apparatus, an image processing method, and an image processing program capable of generating a template more suitable for search processing (matching processing) using frequency information of an image.

SOLUTION TO PROBLEM

According to one aspect of the present invention, an image processing apparatus having a function to generate a template used for search for an object in an input image is provided. The image processing apparatus includes a first image obtaining portion that obtains a first input image including the object, a second image obtaining portion that obtains a second input image including the object, in which position information of the object within the second input image has already been known, a template candidate setting portion that divides a candidate region which is set in the first input image so as to include the object into a plurality of sub regions and sets a plurality of rectangular template candidates each consisting of a single sub region or a plurality of sub regions adjacent to one another, a calculation portion that performs processing for searching for the object with the use of each template candidate in the second input image and calculates search accuracy of each template candidate based on a result of performed search processing, and a generation portion that selects a plurality of partial templates from among the plurality of template candidates based on the search accuracy and a size of each template candidate to generate a set of selected partial templates as the template.

Preferably, the calculation portion includes a frequency information calculation portion that calculates frequency information from each of each template candidate and a region corresponding to the template candidate set in the second input image and an object searching portion that performs processing for searching for the object based on the frequency information.

Preferably, the generation portion includes a selection indicator calculation portion that calculates a selection indicator based on a similarity calculated in the search processing and a weight coefficient dependent on a size of a template candidate and a selection portion that selects as the partial template, a template candidate higher in selection indicator calculated by the selection indicator calculation portion.

Preferably, the image processing apparatus further includes a third image obtaining portion that obtains a third input image to be searched for the object and a searching portion that performs search processing using each of the plurality of partial templates on the third input image and outputs position information of the object in the third input image based on a result of search processing.

Further preferably, the image processing apparatus further includes a storage portion that stores a similarity for each of the plurality of partial templates, which is calculated as a result of search processing by the searching portion over a plurality of the third input images, and a weight changing portion that changes a weight in the searching portion for the plurality of partial templates based on change over time in similarity stored in the storage portion.

Preferably, the template candidate setting portion expands the candidate region and sets again a template candidate when the calculation portion fails to calculate effective search accuracy for any template candidate.

Preferably, the template candidate setting portion changes a position of the candidate region and sets again a template candidate when the calculation portion fails to calculate effective search accuracy for any template candidate.

According to another aspect of the present invention, an image processing method of generating a template used for search for an object in an input image is provided. The image processing method includes the steps of obtaining a first input image including the object, obtaining a second input image including the object, in which position information of the object within the second input image has already been known, dividing a candidate region which is set in the first input image so as to include the object into a plurality of sub regions and setting a plurality of rectangular template candidates each consisting of a single sub region or a plurality of sub regions adjacent to one another, performing processing for searching for the object with the use of each template candidate in the second input image and calculating search accuracy of each template candidate based on a result of performed search processing, and selecting a plurality of partial templates from among the plurality of template candidates based on the search accuracy and a size of each template candidate to generate a set of selected partial templates as the template.

According to yet another aspect of the present invention, an image processing program for generating a template used for search for an object in an input image is provided. The image processing program causes a computer to perform the steps of obtaining a first input image including the object, obtaining a second input image including the object, in which position information of the object within the second input image has already been known, dividing a candidate region which is set in the first input image so as to include the object into a plurality of sub regions and setting a plurality of rectangular template candidates each consisting of a single sub region or a plurality of sub regions adjacent to one another, performing processing for searching for the object with the use of each template candidate in the second input image and calculating search accuracy of each template candidate based on a result of performed search processing, and selecting a plurality of partial templates from among the plurality of template candidates based on the search accuracy and a size of each template candidate to generate a set of selected partial templates as the template.

ADVANTAGEOUS EFFECTS OF INVENTION

According to the present invention, a template more suitable for search processing (matching processing) using frequency information of an image can be generated.

BRIEF DESCRIPTION OF DRAWINGS

Fig. 1 is a schematic diagram showing an application of template matching according to an embodiment of the present invention.

Fig. 2 is a block diagram showing a configuration when template matching according to the embodiment of the present invention is implemented by a personal computer.

Fig. 3 is a schematic diagram for illustrating overview of template generation processing according to a first embodiment of the present invention.

Fig. 4 is a block diagram showing a functional configuration of an image processing apparatus according to the first embodiment of the present invention.

Fig. 5 is a diagram showing one example of processing for dividing a candidate region in the image processing apparatus according to the first embodiment of the present invention.

Fig. 6 is a diagram showing one example of processing for generating a template candidate (a block of $2\times1$) in the image processing apparatus according to the first embodiment of the present invention.

Fig. 7 is a diagram showing one example of processing for generating a template candidate (a block of $3\times2$) in the image processing apparatus according to the first embodiment of the present invention.

Fig. 8 is a schematic diagram for illustrating matching processing in a calculation portion according to the first embodiment of the present invention.

Fig. 9 is a schematic diagram for illustrating in further detail processing contents in matching processing (RIPOC) shown in Fig. 8.

Fig. 10 is a flowchart showing an overall procedure in template generation processing according to the first embodiment of the present invention.

Fig. 11 is a flowchart showing an overall procedure in template matching processing according to the first embodiment of the present invention.

Fig. 12 is a diagram for illustrating a function to automatically set again a candidate region according to a second embodiment of the present invention.

Fig. 13 is a diagram for illustrating a function to automatically set again a candidate region according to a third embodiment of the present invention.

Fig. 14 is a diagram for illustrating an input image obtained by the image processing apparatus according to a fourth embodiment of the present invention.

Fig. 15 is a diagram for illustrating processing for evaluation of search accuracy by the image processing apparatus according to the fourth embodiment of the present invention.

DESCRIPTION OF EMBODIMENTS

An embodiment of the present invention will be described in detail with reference to the drawings. The same or corresponding elements in the drawings have the same reference characters allotted and description thereof will not be repeated.

[A. Overview]

The present embodiment is directed to an image processing apparatus and an image processing method generating a template used for search for an object in an input image. For search for an object in the input image, template matching processing with the use of a template registered in advance is employed.

In the present embodiment, matching processing is performed with the use of a plurality of partial templates (hereinafter combination thereof being also denoted as an "integrated template") generated in processing which will be described later. This integrated template is constituted of a plurality of partial templates selected from among a plurality of template candidates.

[B. System Configuration]

A mount example of an image processing apparatus having a function to generate a template according to an embodiment of the present invention will initially be described.

<<b1: Application>>

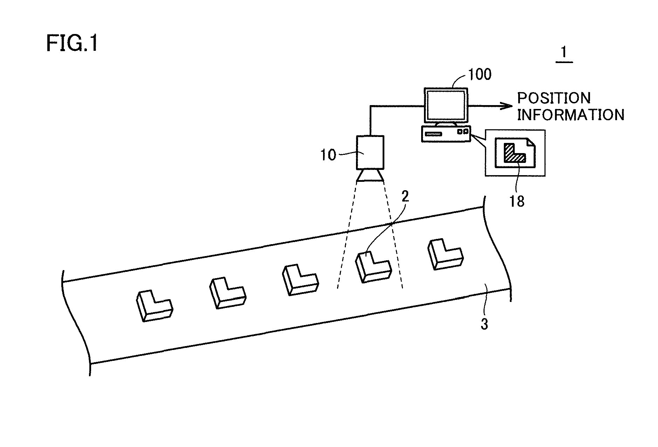

Fig. 1 is a schematic diagram showing an application of template matching according to the embodiment of the present invention. Referring to Fig. 1, a system 1 according to the present embodiment is applied to a production line including a belt conveyor 3 by way of example. In this system 1, objects 2 (workpieces) are successively transported by belt conveyor 3 and images including appearance of objects 2 (hereinafter also denoted as "input images") are obtained through image pick-up by a camera 10.

The input image is transmitted to an image processing apparatus 100. Image processing apparatus 100 searches for object 2 in the input image based on an integrated template 18 stored in advance. Image processing apparatus 100 outputs information on a position or an amount of rotation of object 2 (hereinafter also denoted as "position information") obtained through this template matching processing. This position information indicates a position of object 2 at least in the input image, and it may include such information as an amount of rotation or a magnification of object 2 (corresponding to a position in a direction of an optical axis of the camera) in addition to this position. In the template matching processing, frequency information of an image is used.

In system 1, what kind of subject other than object 2 is present within a range of image pick-up by camera 10 is unknown. Information included in a region other than object 2 may vary depending on each image pick-up timing or a condition for image pick-up. When a movable portion is included in object 2 itself, a state of that movable portion may vary. If such a region which may vary (hereinafter also denoted as an "unqualified region") is included in a template, matching processing cannot necessarily be performed appropriately. Then, the present embodiment provides a function to efficiently and readily generate a template not including such an unqualified region.

<<b2: Implementation with Personal Computer>>

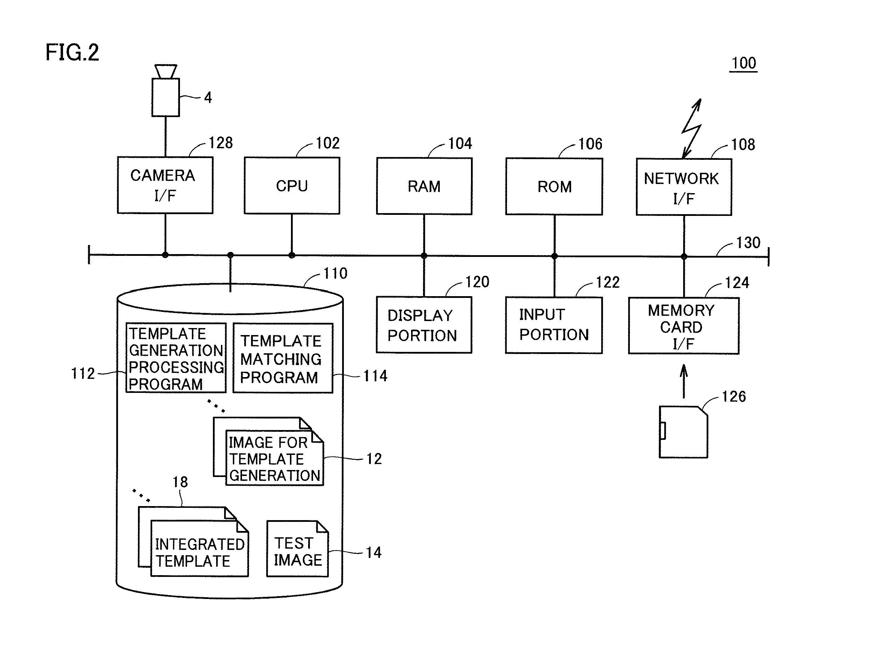

Fig. 2 is a block diagram showing a configuration when template matching according to the embodiment of the present invention is implemented by a personal computer.

Referring to Fig. 2, image processing apparatus 100 implemented by a personal computer is mainly mounted on a computer having a general-purpose architecture. Referring to Fig. 2, image processing apparatus 100 includes, as main components, a CPU (Central Processing Unit) 102, a RAM (Random Access Memory) 104, a ROM (Read Only Memory) 106, a network interface (I/F) 108, an auxiliary storage device 110, a display portion 120, an input portion 122, a memory card interface (I/F) 124, and a camera interface (I/F) 128. The components are connected through a bus 130 so as to be able to communicate with one another.

CPU 102 controls the entire image processing apparatus 100 by executing an operating system (OS) or various programs such as a template generation processing program 112 and a template matching processing program 114 stored in ROM 106 or auxiliary storage device 110. RAM 104 functions as a working memory for CPU 102 to execute a program, and primarily stores various types of data necessary for execution of a program. ROM 106 stores an initial program (a boot program) executed at the time of boot in image processing apparatus 100.

Network interface 108 exchanges data with other apparatuses (server apparatuses) through various communication media. More specifically, network interface 108 communicates data through wired circuits such as Ethernet® (LAN (Local Area Network) or WAN (Wide Area Network)) and/or wireless circuits such as wireless LAN

Auxiliary storage device 110 is typically implemented by a large-capacity magnetic recording medium such as a hard disk, and stores an image processing program (template generation processing program 112 and template matching processing program 114) for implementing various types of processing according to the present embodiment, as well as an image for template generation 12, a test image 14, and integrated template 18. Furthermore, auxiliary storage device 110 may store a program such as an operating system.

Image for template generation 12 is used for generating integrated template 18. In the present embodiment, integrated template 18 suitable for matching processing is generated through processing as will be described later.

Display portion 120 displays a GUI (Graphical User Interface) picture provided by an operating system or an image generated as a result of execution of template generation processing program 112 and template matching processing program 114.

Input portion 122 is typically implemented by a keyboard, a mouse, or a touch panel, and outputs contents of an instruction accepted from a user to CPU 102.

Memory card interface 124 reads and write data from and to various memory cards (non-volatile recording media) 126 such as an SD (Secure Digital) card or a CF (CompactFlash®) card.

Camera interface 128 takes in from camera 10, image for template generation 12, test image 14, integrated template 18, and/or an input image obtained through image pick-up of a subject such as object 2. Camera 10 functions as an image obtaining portion for obtaining an image. A main body of image processing apparatus 100 does not have to have a function to pick up an image of a subject. In this case, typically, necessary images are taken in through memory card 126 storing various images obtained with some apparatus. Namely, memory card 126 is attached to memory card interface 124, and various images read from memory card 126 are stored (copied) in auxiliary storage device 110.

Template generation processing program 112 and/or template matching processing program 114 stored in auxiliary storage device 110 is/are distributed as being stored in such a recording medium as a CD-ROM (Compact Disk-Read Only Memory) or distributed from a server apparatus through a network. Template generation processing program 112 and/or template matching processing program 114 may implement processing by invoking at prescribed timing and in a prescribed order, necessary modules among program modules provided as a part of an operating system executed in image processing apparatus 100 (a personal computer). In this case, template generation processing program 112 and/or template matching processing program 114 itself/themselves does/do not contain a module provided by an operating system but implement(s) image processing in cooperation with the operating system. Template generation processing program 112 and/or template matching processing program 114 is/are not a stand-alone program but may be provided as being incorporated in a part of some program. In such a case as well, the program itself does not contain a module as made use of commonly to other programs, but implements image processing in cooperation with other programs. Even template generation processing program 112 not containing some modules does not depart from the spirit of image processing apparatus 100 according to the present embodiment.

Functions provided by template generation processing program 112 and/or template matching processing program 114 may be implemented in part or in the entirety by dedicated hardware.

<<b3: Implementation With Other Features>>

In addition to the implementation with the personal computer described above, for example, mount on a digital camera, a portable telephone, or a smartphone is applicable. In addition, a form like what is called cloud service in which at least one server apparatus performs the processing according to the present embodiment may be applicable. In this case, such a configuration that a user uses his/her own terminal (such as a personal computer or a smartphone) to transmit at least two images to be processed to a server apparatus (on a cloud side) and the server apparatus subjects the transmitted images to be processed to image processing according to the present embodiment is assumed. Furthermore, the server apparatus does not have to perform all functions (processing) but a terminal on a user side and a server apparatus may cooperate with each other to perform image processing according to the present embodiment.

[C. First Embodiment]

Details of processing for generating a template according to the present first embodiment will now be described.

<<c1: Process Overview>>

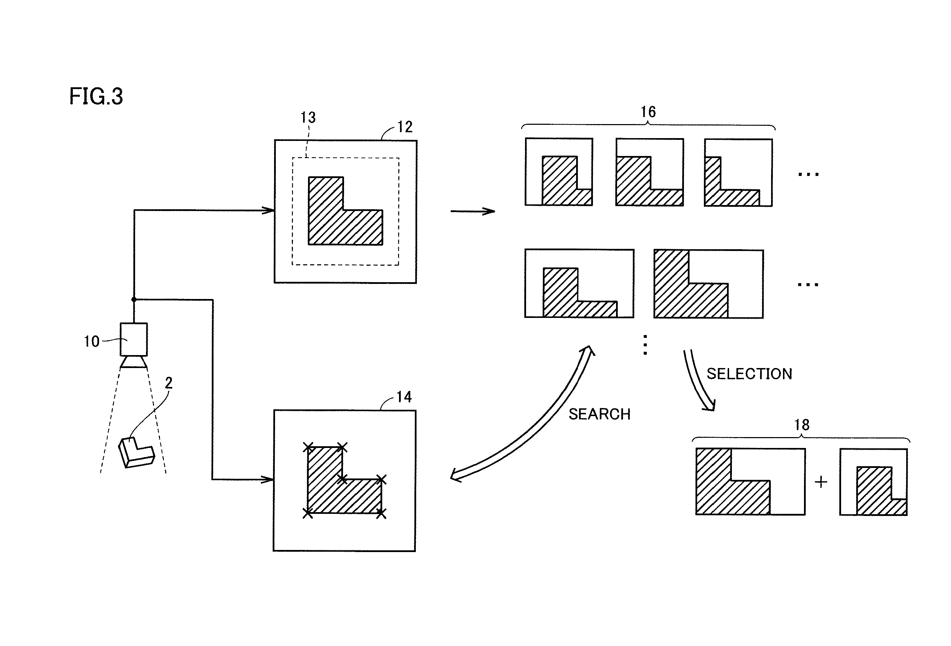

Fig. 3 is a schematic diagram for illustrating overview of template generation processing according to a first embodiment of the present invention. Processing for generating a template is basically performed not on-line as in the production line as shown in Fig. 1, but off-line as being away from the production line. In an environment as described below in which an image can be obtained, however, the processing may be performed on-line.

Referring to Fig. 3, initially, image processing apparatus 100 obtains image for template generation 12 (a first input image) including object 2 with the use of camera 10. Integrated template 18 which will be described later is generated from this image for template generation 12. At least one image for template generation 12 will suffice, however, a plurality of images for template generation may be obtained. Image processing apparatus 100 obtains test image 14 (a second input image) including object 2, in which position information of object 2 within an image has already been known. Namely, position information of object 2 in test image 14 has already been known. Position information of object 2 may be specified by performing matching processing in advance, or it may visually be specified by a user.

In a general procedure, one of input images generated through image pick-up of object 2 a plurality of times with the use of camera 10 is selected as test image 14, and remaining one image or a plurality of images is/are selected as image(s) for template generation 12.

In succession, image processing apparatus 100 divides a candidate region 13 set in image for template generation 12 so as to include object 2 into a plurality of rectangular sub regions, and sets a plurality of rectangular template candidates 16 each consisting of a single sub region or a plurality of sub regions adjacent to one another. Then, image processing apparatus 100 performs matching processing with the use of each template candidate 16 on test image 14, and calculates search accuracy of each template candidate 16 based on a result of performed matching processing.

More specifically, since the position information of object 2 within test image 14 has already been known, image processing apparatus 100 evaluates search accuracy based on a difference between the result of performed matching processing and already known position information.

Finally, image processing apparatus 100 selects a plurality of partial templates from among a plurality of template candidates 16 based on search accuracy to generate combination of selected partial templates as integrated template 18. Therefore, integrated template 18 includes a plurality of selected template candidates 16 (partial templates). Details of matching processing with the use of such integrated template 18 will be described later.

<<c2: Functional Configuration>>

A functional configuration of the image processing apparatus and/or the image processing program according to the present embodiment will now be described.

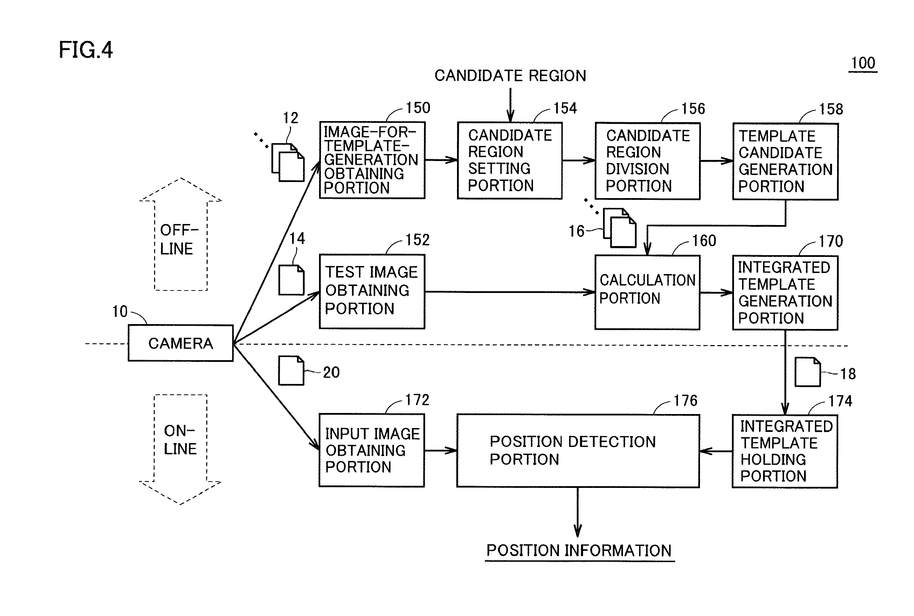

Fig. 4 is a block diagram showing a functional configuration of image processing apparatus 100 according to the first embodiment of the present invention. Referring to Fig. 4, image processing apparatus 100 according to the present embodiment includes, as its main functional configurations, an image-for-template-generation obtaining portion 150, a test image obtaining portion 152, a candidate region setting portion 154, a candidate region division portion 156, a template candidate generation portion 158, a calculation portion 160, an integrated template generation portion 170, an input image obtaining portion 172, an integrated template holding portion 174, and a position detection portion 176.

These functional configurations are implemented as CPU 102 executes template generation processing program 112 and template matching processing program 114 in image processing apparatus 100 shown in Fig. 2. Details of each functional configuration will be described below.

<<c3: Image-for-Template-Generation Obtaining Portion 150>>

Image-for-template-generation obtaining portion 150 obtains an input image for generating integrated template 18. Typically, an image generated through image pick-up of a subject by connected camera 10 is obtained as image for template generation 12. More specifically, image-for-template-generation obtaining portion 150 uses one input image from among input images obtained by photographing object 2 in advance with the use of camera 10 as image for template generation 12. Image for template generation 12 includes object 2 which is a subject.

An image generated by some external apparatus may be obtained through various recording media or communication media.

A plurality of images for template generation 12 may be provided, rather than one image for template generation. In this case, integrated template 18 is generated for each of the plurality of images for template generation 12, and one optimal integrated template 18 may be selected from among these integrated templates 18.

Alternatively, image-for-template-generation obtaining portion 150 may create one image for template generation 12 by accepting a plurality of images for template generation 12 and performing statistical processing (for example, averaging processing) on these images for template generation 12.

<<c4: Test Image Obtaining Portion 152>>

Test image obtaining portion 152 obtains test image 14 used for processing in calculation portion 160 which will be described later. Test image obtaining portion 152 obtains test image 14 including object 2, separately from image for template generation 12. Typically, one image generated as a result of image pick-up of a subject by connected camera 10 is obtained as test image 14. More specifically, test image obtaining portion 152 uses as test image 14, one input image which has not been used as image for template generation 12 among input images obtained by photographing object 2 in advance with the use of camera 10. Test image 14 includes object 2 which is a subject. Here, test image obtaining portion 152 obtains position information (correct information) of object 2 within test image 14 with a known method.

<<c5: Candidate Region Setting Portion 154>>

Candidate region setting portion 154 sets a candidate region (a template region) for image for template generation 12 obtained by image-for-template-generation obtaining portion 150. Namely, candidate region setting portion 154 sets a candidate region (a template region) in an image obtained from image-for-template-generation obtaining portion 150. This candidate region may explicitly be designated by a user or automatically be set with a known method. According to a general method, a candidate region is set such that a position of center of gravity of a candidate region matches with a location at which position detection is desired (for example, a central position of object 2).

It is not necessary, however, to set a position to be searched such that it is set substantially to a position of the center of gravity of a candidate region. For example, a candidate region may be set at a position distant by a certain amount ($\Delta$x, $\Delta$y) from a position to be searched. In this case, a position to be searched can be specified by shifting a result by the certain amount ($\Delta$x, $\Delta$y) from the position to be searched with the use of integrated template 18. Here, it is not necessary either that the position to be searched is included in a template.

A candidate region (a template region) should only be a rectangular region having any size. As will be described later, however, in using rotation invariant phase only correlation (RIPOC), Fourier transform is carried out as internal processing. Therefore, a size (the number of pixels) of a candidate region (a template region) is preferably set to a power of 2 such that fast Fourier transform can be adopted as Fourier transform.

<<c6: Candidate Region Division Portion 156>>

Candidate region division portion 156 divides a candidate region (a template region) set for image for template generation 12 into a plurality of rectangular sub regions. Namely, candidate region division portion 156 divides into a plurality of sub regions, a candidate region set in image for template generation 12 so as to include object 2.

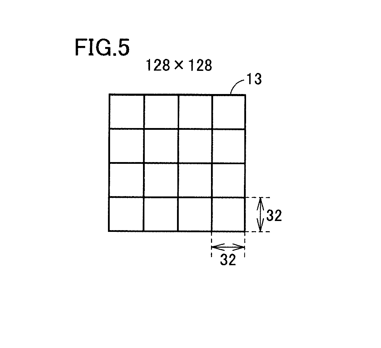

Fig. 5 is a diagram showing one example of processing for dividing a candidate region in image processing apparatus 100 according to the first embodiment of the present invention. Referring to Fig. 5, for example, when a candidate region having a size of 128×128 is set, the candidate region is divided into 4×4 such that each sub region has a size of 32×32.

Each sub region into which the candidate region is divided is desirably a rectangular region having any size. As will be described later, however, in using rotation invariant phase only correlation (RIPOC), Fourier transform is carried out as internal processing. Therefore, a size of each sub region resulting from division of the candidate region is preferably set to a power of 2 such that fast Fourier transform can be adopted as Fourier transform.

<<c7: Template Candidate Generation Portion 158>>

In connection with a sub region resulting from division by candidate region division portion 156, template candidate generation portion 158 sets a plurality of rectangular template candidates each consisting of a single sub region or a plurality of sub regions adjacent to one another. Namely, template candidate generation portion 158 couples to one another, sub regions resulting from division by candidate region division portion 156 so as to create a rectangular region. In other words, template candidate generation portion 158 generates a plurality of template candidates by coupling with an adjacent region, regions resulting from division.

For example, when each sub region resulting from division by candidate region division portion 156 is expressed as a "block", in an example shown in Fig. 5, a candidate region is constituted of 4x4 blocks. A rectangular region (template candidate 16) is generated by coupling this candidate region for each of 16 patterns of 1×1, 1×2, 1×3, 1×4, 2×1, 2×2, 2×3, 2×4, 3×1, 3×2, 3×3, 3×4, 4×1, 4×2, 4×3, and 4×4.

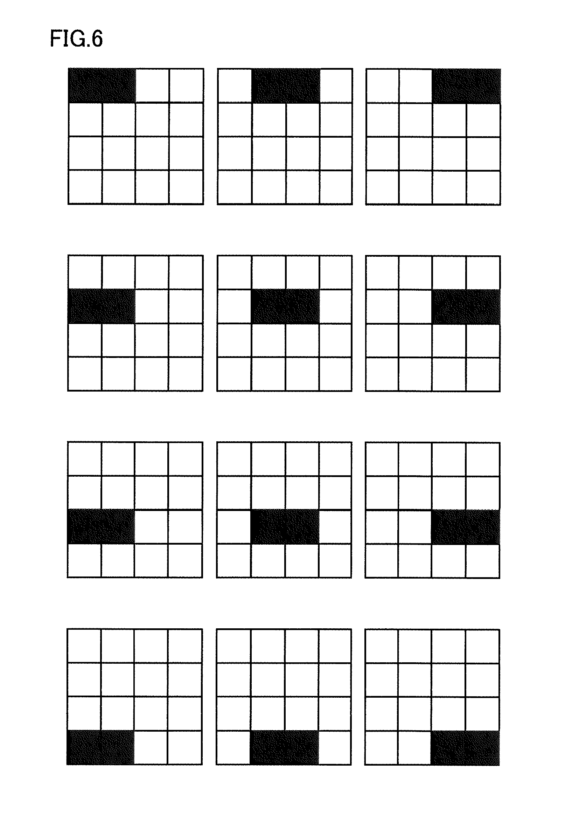

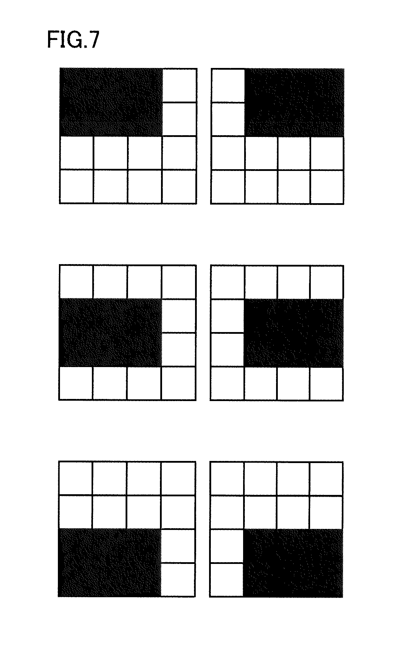

Fig. 6 is a diagram showing one example of processing for generating a template candidate (a block of 2×1) in image processing apparatus 100 according to the first embodiment of the present invention. Fig. 7 is a diagram showing one example of processing for generating a template candidate (a block of 3×2) in image processing apparatus 100 according to the first embodiment of the present invention.

For example, with the pattern of 2×1, 12 template candidates are set as shown in Fig. 6. With the pattern of 3×2, 6 template candidates are set as shown in Fig. 7.

For each pattern described above, the number of set template candidates is as below.

    (1) Pattern of 1×1: 16
    (2) Pattern of 1×2: 12
    (3) Pattern of 1×3: 8
    (4) Pattern of 1×4: 4
    (5) Pattern of 2×1: 12
    (6) Pattern of 2×2: 9
    (7) Pattern of 2×3: 6
    (8) Pattern of 2×4: 3
    (9) Pattern of 3×1: 8
    (10) Pattern of 3×2: 6
    (11) Pattern of 3×3: 4
    (12) Pattern of 3×4: 2
    (13) Pattern of 4×1: 4
    (14) Pattern of 4×2: 3
    (15) Pattern of 4×3: 2

(16) Pattern of 4×4: 1

As above, basically, a template candidate is set by coupling, for all combinations of adjacent blocks.

<<c8: Calculation Portion 160>>

Calculation portion 160 performs matching processing with the use of each template candidate 16 on test image 14, and calculates search accuracy of each template candidate 16 based on a result of performed matching processing. Namely, calculation portion 160 uses each of the plurality of template candidates 16 so as to search for object 2 within test image 14. In the present embodiment, RIPOC is used as this search method so as to calculate a correlation value between test image 14 and each template candidate. Matching processing performed in this calculation portion 160 is the same method as matching processing performed in image processing apparatus 100 in Fig. 1 for search for object 2, and uses frequency information of an image.

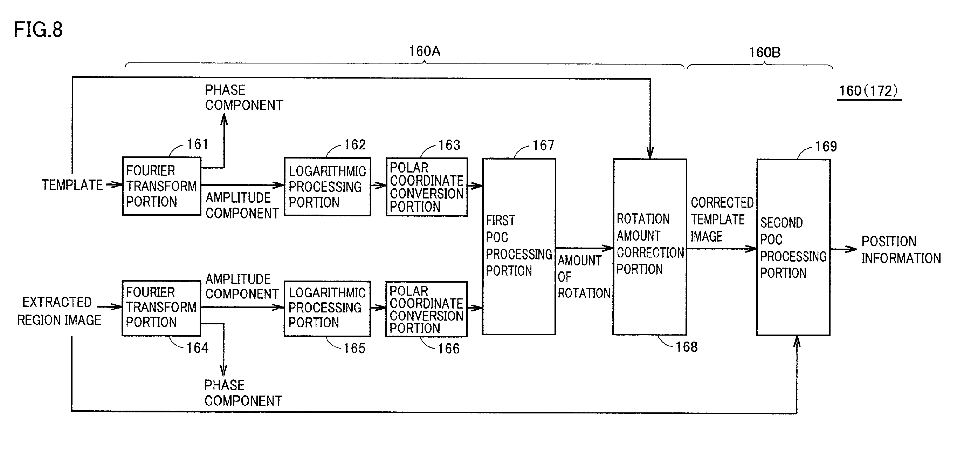

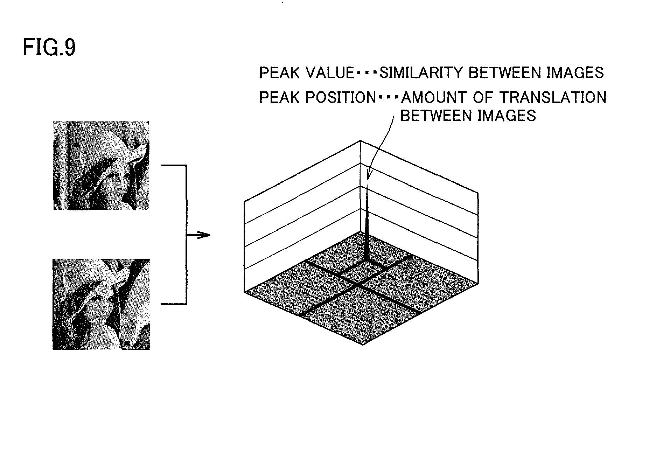

Fig. 8 is a schematic diagram for illustrating matching processing (RIPOC) in calculation portion 160 according to the first embodiment of the present invention. Fig. 9 is a schematic diagram for illustrating in further detail processing contents in matching processing (RIPOC) shown in Fig. 8.

Referring to Fig. 8, RIPOC includes processing calculating how much an extracted region has rotated with respect to a template and correcting an angle of rotation of the template (a reference character 160A) and processing calculating how high similarity and how large amount of translation are present between the corrected template obtained through correction of the angle of rotation and the extracted region (a reference character 160B).

In Fig. 8, each template candidate 16 is used as a "template", a region as large as this template is successively set in test image 14, and these are used as "extracted region images."

More specifically, calculation portion 160 includes Fourier transform portions 161 and 164, logarithmic processing portions 162 and 165, polar coordinate conversion portions 163 and 166, a first POC processing portion 167, a rotation amount correction portion 168, and a second POC processing portion 169.

Fourier transform portions 161 and 164 each calculate frequency information (an amplitude component and a phase component) included in the template and the extracted region image. In the present RIPOC processing, the phase component is not necessarily required, and hence it does not have to be calculated.

Logarithmic processing portion 162 and polar coordinate conversion portion 163 convert an amplitude component of the template into a logarithm and into a polar coordinate. Similarly, logarithmic processing portion 162 and polar coordinate conversion portion 166 convert an amplitude component of the extracted region image into a logarithm and into a polar coordinate. As a result of conversion into the polar coordinate, an amount of rotation is expressed as a coordinate point on a two-dimensional coordinate.

First POC processing portion 167 performs a correlation operation of a result of polar coordinate conversion output from each of polar coordinate conversion portions 163 and 166, and calculates an amount of rotation.

Rotation amount correction portion 168 rotationally corrects the template in accordance with the amount of rotation calculated by first POC processing portion 167. Namely, rotation amount correction portion 168 generates a corrected template by rotationally correcting the template.

As a method of rotationally correcting the template in rotation amount correction portion 168, a method of rotating the template itself in a real space can be adopted. Alternatively, as will be described later, when a frequency space is handled in second POC processing portion 169, rotation in a real space is not necessary, but a method of rotating data (amplitude information and phase information) which has been subjected to Fourier transform which is an internal expression of POC processing may be adopted.

Second POC processing portion 169 performs POC processing (phase-only correlation processing) between the corrected template and the extracted region image and calculates a similarity and a position (an amount of translation between images). A peak value in POC processing represents a similarity between images and a position of the peak represents an amount of translation (an amount of position displacement) between images. Therefore, positional relation between the corrected template and the extracted region image is known. Second POC processing portion 169 outputs position information including an amount of rotation based on this positional relation. Fig. 9 schematically shows a result of processing in second POC processing portion 169. In the POC processing, a correlation value is calculated between components of spatial frequencies included in respective images, so that a peak appears at a certain position as shown in a correlation image in Fig. 9. This peak position represents an amount of translation between images and magnitude of the peak represents a similarity between images. An amount of translation between images can generally be calculated by searching a range approximately ±1/4 of an image size of a template.

Thus, calculation portion 160 performs processing for searching for object 2 in test image 14 with the use of each template candidate 16. Position information and a similarity obtained based on each template candidate 16 are output as results of this search processing.

<<c9: Integrated Template Generation Portion 170>>

Integrated template generation portion 170 outputs as integrated template 18, combination of a plurality of partial templates (template candidates 16) selected from among a plurality of template candidates 16 based on a size and search accuracy obtained by calculation portion 160. Namely, integrated template generation portion 170 generates as integrated template 18, combination of a plurality of template candidates based on position information, a similarity, and a size of template candidate 16. In other words, integrated template generation portion 170 generates integrated template 18 constituted of a plurality of partial templates among which relative positional relation is kept. A method of combining template candidates 16 will be described below.

Basically, an effective partial template is selected based on a similarity and/or a template size from among template candidates 16 of which result obtained through matching processing in calculation portion 160 (position of object 2) matches with a correct position of object 2.

An optimal template is a template high in similarity (a correlation value: a peak value in POC) and large in size.

Therefore, when there is template candidate 16 having a highest similarity and a largest size, that template candidate 16 is selected as a first partial template. Then, when there is similarly template candidate 16 having a highest similarity and a largest size among remaining template candidates 16, that template candidate 16 is selected as a second partial template.

A case that making decision on one template candidate 16 having a highest similarity and a largest size fails will be described below. Though a similarity is a very effective indicator for test image 14 prepared in advance, from a point of view of robustness, importance is preferably placed on a template size. Template candidate 16 larger in template size can stabilize search accuracy and also can expand a search area. Therefore, template candidate 16 larger in template size is selected if a similarity is the same. Furthermore, when a template size is sufficiently large although a similarity is slightly lower, larger template candidate 16 is desirably selected, with importance being placed on the template size.

Then, in selecting template candidate 16 for use as integrated template 18, for example, an indicator R may be calculated for each template candidate 16 by multiplying a calculated similarity by a weight coefficient which is set dependent on a template size, and template candidate 16 may be selected based on magnitude of indicator R. Namely, indicator R is calculated in accordance with the Expression (1) shown below:

$$\text{Indicator R} = \text{Weight Coefficient f (Template Size)} \times \text{Similarity} \quad \ldots (1)$$

where weight coefficient f is a value dependent on a template size (or a template area), and the weight coefficient is greater as the template area is greater. A similarity represents magnitude of a correlation value as described above.

As above, indicator R is calculated for each template candidate 16, and a prescribed number of (for example, three) template candidates 16 are selected in a descending order of magnitude of a value for this indicator R. This selected template candidate 16 is employed as integrated template 18. Namely, integrated template generation portion 170 constitutes integrated template 18 to be used as a final template, of a prescribed number of selected template candidates 16. When matching processing with the use of integrated template 18 constituted of a plurality of template candidates 16 is performed, corresponding positions are obtained with the use of template candidates (partial templates) 16 and these corresponding positions are averaged, which are output as results of search based on integrated template 18.

Thus, integrated template generation portion 170 calculates indicator R for template candidate 16 of which accurate position information is obtained, based on a similarity calculated by calculation portion 160 and a weight coefficient dependent on a size of template candidate 16 (a template size). Then, integrated template generation portion 170 determines template candidate 16 higher in calculated indicator R as a partial template to be employed as integrated template 18.

A weight coefficient among template candidates 16 may be determined based on magnitude of an amount of position displacement of template candidate 16, magnitude of a similarity, or a size of template candidate 16.

In general, as an amount of position displacement from test image 14 (the extracted region image) in the partial template is smaller, the partial template is more effective. As a similarity with test image 14 (the extracted region image) is higher, the partial template is more effective. Furthermore, as a template size is larger, the template is more effective. Then, in the present embodiment, robustness is improved by determining a weight among partial templates based on these values.

As an approach to select (evaluate) template candidate 16 to be employed as integrated template 18, an approach as below may be employed instead of or in addition to the approach described above.

(1) Instead of the method of using indicator R as described above, a cost function as maximizing a similarity + a template size may be defined by using a matching (DP matching) approach based on dynamic programming. Combination of template candidates 16 minimizing this cost function is determined as integrated template 18.

(2) When a plurality of test images 14 can be prepared, each test image 14 is subjected to matching processing so as to calculate position information and a similarity thereof. Then, a degree of variation in position information or similarity due to difference among test images 14 is calculated for the same template candidate 16. Whether or not the template candidate is suitable for use as integrated template 18 may be determined based on the degree of variation in position information or similarity. By adopting such an approach, template candidate 16 allowing more stable matching processing can be selected.

(3) Template candidate 16 may be selected in a descending order of magnitude of a value for indicator R until a similarity as integrated template 18 exceeds a predetermined threshold value. According to this approach, the number of selected template candidates 16 is not restricted to a predetermined value, but a necessary number of template candidates 16 are dynamically selected.

(4) The number of selected template candidates 16 may be set as appropriate. For example, template candidate 16 is selected in a descending order of similarity, and evaluation as integrated template 18 is made. More specifically, position information and a similarity based on integrated template 18 at a time point when two template candidates 16 are selected are calculated for a plurality of test images 14, and whether or not variation among a plurality of calculated pieces of position information is accommodated within prescribed values is evaluated. Here, regarding test image 14, a test image different from test image 14 used at the time of selection of template candidate 16 is preferably prepared.

Here, when variation among the plurality of pieces of position information is not within the prescribed values, another template candidate 16 is added. When variation among the plurality of pieces of position information is within the prescribed values, selection of new template candidate 16 ends and template candidates 16 selected until that time are output as integrated template 18.

(5) Template candidates 16 constituting integrated template 18 may be superimposed on each other.

<<c10: Input Image Obtaining Portion 172>>

Input image obtaining portion 172 obtains input image 20 to be subjected to search processing. Typically, input images 20 generated through image pick-up by camera 10, of workpieces which flow successively on the production line as shown in Fig. 1, are successively obtained. Input image obtaining portion 172 outputs obtained input images 20 to position detection portion 176.

<<c11: Integrated Template Holding Portion 174>>

Integrated template holding portion 174 holds integrated template 18 generated by integrated template generation portion 170. Then, in response to a request from position detection portion 176, the integrated template holding portion outputs held integrated template 18.

<<c12: Position Detection Portion 176>>

Position detection portion 176 performs in input image 20 from input image obtaining portion 172, search processing with the use of each of a plurality of partial templates (template candidates 16) determined as integrated template 18, integrates results of search processing, and outputs the result as a final search result. More specifically, position detection portion 176 performs matching processing between the partial template and input image 20 with the use of each partial template included in integrated template 18. Namely, position detection portion 176 decomposes a partial region of input image 20 and each partial template into frequency information, and thereafter outputs position information of object 2 based on an amount of relative deviation in a frequency space.

RIPOC shown in Fig. 4 described above is used for matching processing performed by position detection portion 176, however, other matching processing with the use of frequency information can also be adopted.

Furthermore, position detection portion 176 performs statistical processing (for example, averaging processing) of position information obtained based on each partial template and outputs results thereof as results of matching processing based on integrated template 18. More specifically, a position resulting from averaging of corresponding positions which are obtained based on each partial template is output as a final search result. This final search result is output as position information including information on a position and an amount of rotation.

The search result based on integrated template 18 is not limited to a position obtained by averaging corresponding positions which are obtained based on respective partial templates, and a calculation method as below may be adopted.

(1) Position information obtained based on the partial template highest in similarity among partial templates included in integrated template 18 may be output as a final search result.

(2) A POC value calculated for each partial template is added on a three-dimensional space in correspondence with a position of the center of gravity of each partial template. Then, final position information may be determined by finding a peak position from the added POC values.

(3) Screening into template candidate 16 to be employed as integrated template 18 and template candidate 16 otherwise has been performed, however, some template candidates 16 to be employed as integrated template 18 are high in robustness but others are not. Then, final position information may be calculated by weighting selected template candidate 16 in accordance with a similarity. By adopting such a method, higher importance is placed on information on template candidate 16 which contributes to improvement in robustness, and hence search accuracy can be more stable.

<<c13: Processing Procedure>>

An overall procedure in template generation processing and template matching processing according to the present embodiment will now be described.

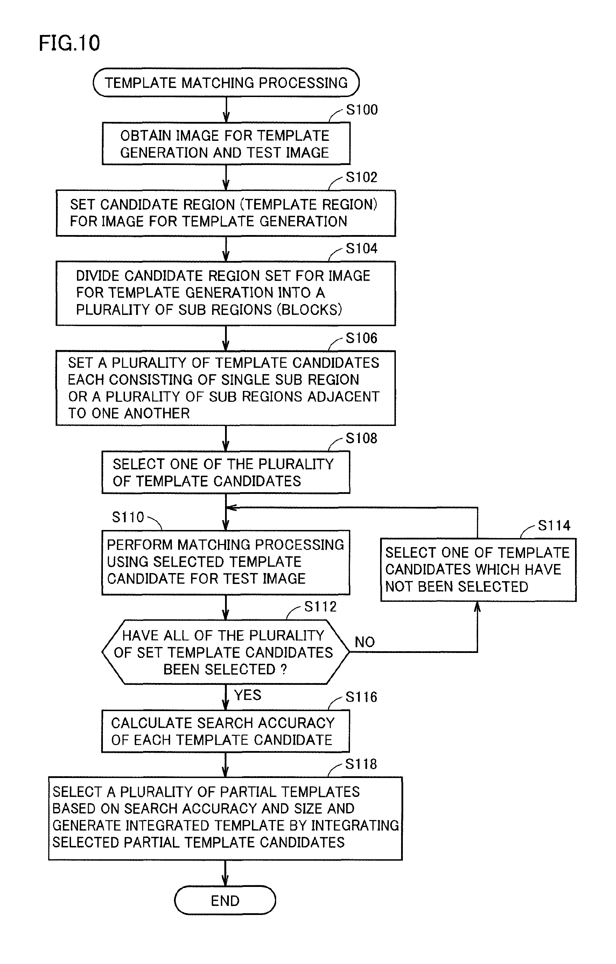

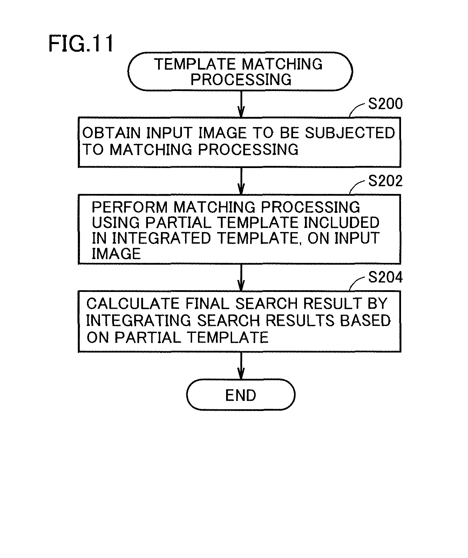

Fig. 10 is a flowchart showing an overall procedure in template generation processing according to the first embodiment of the present invention. Fig. 11 is a flowchart showing an overall procedure in template matching processing according to the first embodiment of the present invention. Each step shown in Figs. 10 and 11 is typically implemented as CPU 102 (Fig. 2) executes template generation processing program 112 and template matching processing program 114. Typically, template matching processing shown in Fig. 10 is off-line processing and template matching processing shown in Fig. 11 is on-line processing.

Referring to Fig. 10, CPU 102 obtains image for template generation 12 and test image 14 (step S100). More specifically, CPU 102 obtains a plurality of input images through image pick-up of object 2 by camera 10, and adopts some of these input images as test images 14 and adopts remainder as images for template generation 12.

CPU 102 sets a candidate region (a template region) in image for template generation 12 (step S102). As described above, this candidate region may manually be set by a user or automatically set with a known method. Then, CPU 102 divides the candidate region set in image for template generation 12 into a plurality of sub regions (blocks) (step S104) and generates a plurality of template candidates 16 each consisting of a single sub region or a plurality of sub regions adjacent to one another (step S106).

CPU 102 selects one of the plurality of template candidates 16 (step S108), and performs in test image 14, matching processing with the use of selected template candidate 16 so as to calculate position information and a similarity of object 2 (step S110).

CPU 102 determines whether or not all of the plurality of template candidates 16 have been selected, that is, matching processing based on all template candidates 16 has been performed (step S 112). When there are template candidates 16 which have not been selected among the plurality of template candidates 16 (NO in step S112), CPU 102 selects one of template candidates 16 which have not been selected (step S114) and performs processing in step S110 or later.

In contrast, when matching processing based on all of the plurality of template candidates 16 has been performed (YES in step S112), CPU 102 calculates search accuracy of each template candidate 16 based on an amount of deviation between a correct position of object 2 in test image 14 and the position searched based on each template candidate 16, as well as on a similarity calculated in matching based on each template candidate 16. Finally, CPU 102 selects a plurality of partial templates from among the plurality of template candidates 16 based on the search accuracy calculated in step S116 and a size of template candidate 16, and generates integrated template 18 which is combination of the selected partial templates (step S118). Integrated template 18 is generated through the processing above. This integrated template 18 is stored in a prescribed area of the storage portion. Template matching processing shown in Fig. 11 is performed with the use of this integrated template 18.

Referring to Fig. 11, CPU 102 obtains input image 20 to be subjected to matching processing (step S200). CPU 102 performs on input image 20, matching processing with the use of a partial template (template candidate 16) included in integrated template 18 (step S202). Then, CPU 102 integrates results of search based on the partial template (a position, a similarity, and an amount of rotation) and calculates a final search result (step S204). Typically, CPU 102 calculates position information of object 2 by averaging these results. This calculated position information is output as a result of search based on integrated template 18. This is the end of template matching processing. Template matching processing shown in Fig. 11 may be performed each time object 2 (workpiece) is transported on belt conveyor 3.

«c14: Advantages»

In the present embodiment, each of a plurality of template candidates is evaluated, then a partial template used for actual matching processing is determined, and an integrated template is constituted as an assembly of these template candidates to finally be employed. By generating the integrated template as the assembly of such partial templates, such a template as not including an unqualified region can be generated. Thus, accuracy in matching processing or robustness can be improved.

Since a partial template (template candidate 16) obtained by coupling of sub regions resulting from division of a candidate region is employed, a low-frequency information included in an image can be made use of, and thus accuracy in matching processing or robustness can be improved.

[D. Second Embodiment]

In the first embodiment described above, a processing example in which a candidate region (a template region) set by image-for-template-generation obtaining portion 150 is divided into a plurality of sub regions and an integrated template is generated based on these sub regions has been described. As described above, though a candidate region set by image-for-template-generation obtaining portion 150 is set by a user, in some cases, generation of an appropriate integrated template with the use of a candidate region set by the user fails. For example, there is a case that a candidate region set by the user is excessively small and hence sufficient position detection accuracy cannot be obtained in matching processing.

In a second embodiment, such a configuration that a candidate region (a template region) set by image-for-template-generation obtaining portion 150 can automatically be set again in such a situation will be exemplified. Namely, when a candidate region initially set by the user is inappropriate, the candidate region is expanded and calculation is again carried out.

The image processing apparatus according to the second embodiment is merely different from image processing apparatus 100 according to the first embodiment mainly in a functional configuration of candidate region setting portion 154 (Fig. 4). Therefore, detailed description of other functional configurations or processing contents will not be repeated.

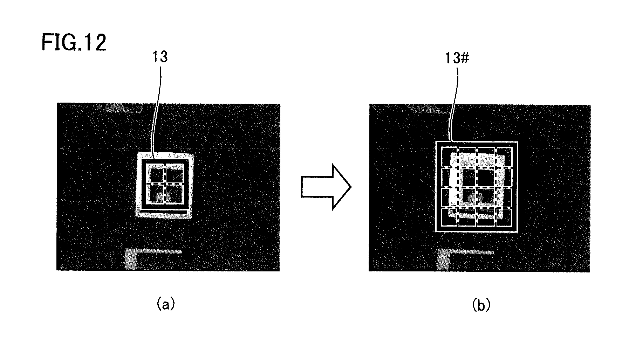

Fig. 12 is a diagram for illustrating a function to automatically set again a candidate region according to the second embodiment of the present invention. Fig. 12 shows an example in which a candidate region (a template region) is set in an object including a hole. Fig. 12 (a) shows an example in which candidate region 13 consisting of 2x2 blocks is set. When a view of the inside of this hole changes depending on a position or an inclination of an object, a partial template (template candidate 16) high in search accuracy cannot be obtained with any combination of blocks resulting from division into 4. Therefore, search accuracy of generated integrated template 18 is also low.

In such a case, for example, as shown in Fig. 12 (b), a candidate region 13# of which size has been changed is set, and then a partial template (template candidate 16) is again selected. In the example shown in Fig. 12 (b), since blocks can be set in a portion other than the inside of the hole of which view changes owing to variation in environment, integrated template 18 high in search accuracy can be created.

Thus, when effective search accuracy cannot be calculated for any template candidate, the image processing apparatus according to the second embodiment expands a candidate region and then performs processing again. In other words, when appropriate integrated template 18 cannot be obtained from candidate region 13 set by the user, the image processing apparatus according to the second embodiment creates optimal integrated template 18 by expanding candidate region 13 and carrying out calculation again.

Though the example in which a candidate region (a template region) is expanded has been described in the description above, when a candidate region is too large, the candidate region may be made smaller to the contrary.

[E. Third Embodiment]

In the first embodiment described above, a processing example in which a candidate region (a template region) set by image-for-template-generation obtaining portion 150 is divided into a plurality of sub regions and an integrated template is generated based on these sub regions has been described. As described above, though a candidate region set by image-for-template-generation obtaining portion 150 is set by a user, in some cases, generation of an appropriate integrated template with a candidate region set by the user fails, such as a case that a candidate region set by the user largely includes a movable portion of object (workpiece) 2 and hence a view varies for each workpiece 2.

In a third embodiment, such a configuration that a candidate region (a template region) set by image-for-template-generation obtaining portion 150 can automatically be set again in such a situation will be exemplified. Namely, when a candidate region initially set by the user is inappropriate, the candidate region is moved to a portion around the same and calculation is again carried out.

The image processing apparatus according to the third embodiment is merely different from image processing apparatus 100 according to the first embodiment mainly in a functional configuration of candidate region setting portion 154 (Fig. 4). Therefore, detailed description of other functional configurations or processing contents will not be repeated.

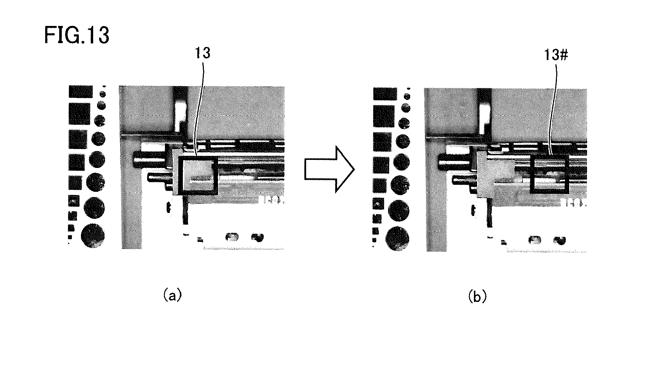

Fig. 13 is a diagram for illustrating a function to automatically set again a candidate region according to the third embodiment of the present invention. Fig. 13 (a) shows a case that articles very large in individual difference are included in set candidate region 13. In such a case, a partial template (template candidate 16) high in search accuracy cannot be obtained with any combination of blocks resulting from division of candidate region 13. Therefore, search accuracy of generated integrated template 18 is also low.

In such a case, for example, as shown in Fig. 13 (b), candidate region 13 is moved to another location and a candidate region is set again (candidate region 13#). Then, a partial template (template candidate 16) is again selected. In the example shown in Fig. 13 (b), since candidate region 13# is moved to a position where a view is less likely to vary depending on workpiece 2, integrated template 18 high in search accuracy can be created.

Thus, when effective search accuracy cannot be calculated for any template candidate, the image processing apparatus according to the third embodiment changes a position of a candidate region and then performs processing again. In other words, the image processing apparatus according to the third embodiment selects a partial template again by moving candidate region 13 to another location.

Thus, when effective search accuracy cannot be calculated for any template candidate, the image processing apparatus according to the third embodiment moves a candidate region to another location and then performs processing again. By adopting a function to automatically update such a candidate region, optimal integrated template 18 can be created.

Furthermore, processing in the second embodiment and processing in the third embodiment may be performed in parallel.

[F. Fourth Embodiment]

In the first embodiment described above, a processing example in which template candidate 16 is set with the use of image for template generation 12 obtained in advance, template candidate 16 is evaluated with use of test image 14 obtained in advance, and optimal integrated template 18 constituted of a plurality of partial templates is generated has been described. When actual use on the production line is assumed, however, search accuracy of integrated template 18 may lower due to change over time involved with operations (for example, change in a lot of workpieces 2).

In a fourth embodiment, such a configuration that transition over time of search accuracy of integrated template 18 is observed and necessary measures are taken when search accuracy lowers is exemplified. In the description below, a difference from image processing apparatus 100 according to the first embodiment described above will mainly be described and detailed description of other functional configurations or processing contents will not be repeated.

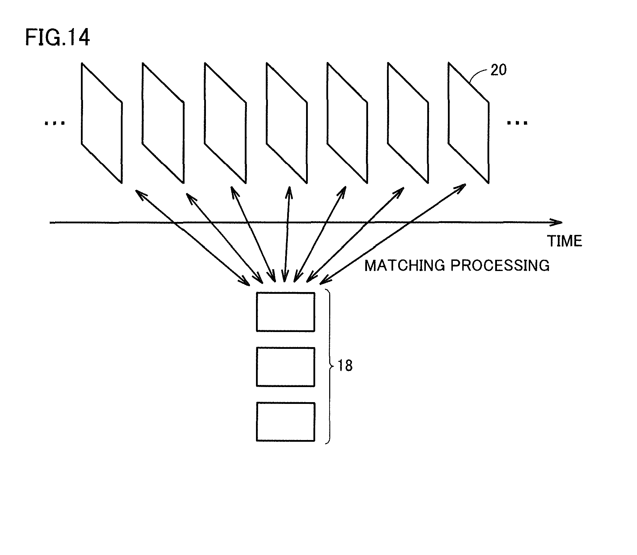

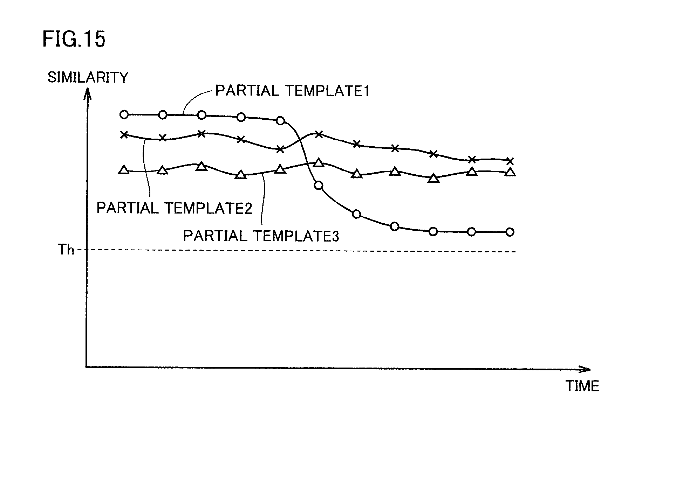

Fig. 14 is a diagram for illustrating input images 20 obtained by the image processing apparatus according to the fourth embodiment of the present invention. Fig. 15 is a diagram for illustrating processing for evaluation of search accuracy by the image processing apparatus according to the fourth embodiment of the present invention.

As shown in Fig. 14, the image processing apparatus obtains input image 20 every prescribed time, and sequentially carries out matching of each input image 20 with the use of integrated template 18. The image processing apparatus holds for each partial template, a prescribed times, a similarity calculated in matching of each input image 20. For example, as shown in Fig. 15, change over time in similarity can be evaluated by holding a similarity for each partial template. Namely, the image processing apparatus stores similarities calculated as results of search processing through template matching over a plurality of input images 20.

In the present embodiment, as will be described below, total evaluation of integrated template 18 and individual evaluation of partial templates constituting integrated template 18 are made. Any one of them may be made.

In total evaluation of integrated template 18, when a similarity found through matching has lowered in a majority of partial templates constituting integrated template 18, it is difficult to continue to use the partial templates as integrated template 18. Therefore, in such a case, the image processing apparatus suspends matching processing (position detection processing) as a fail-safe, and creates again an integrated template (off-line). More specifically, when a similarity calculated with the use of the partial template constituting integrated template 18 is lower than a threshold value Th, the position detection processing is suspended.

Then, in individual evaluation of the partial templates, change over time in similarity is evaluated for each partial template. For example, when a majority of partial templates constituting integrated template 18 achieve stable similarities but a sign of lowering over time in similarity of some partial templates is observed, the image processing apparatus lowers a weight for such partial templates. Namely, the image processing apparatus relatively lowers the weight for information on corresponding positions detected with the use of partial templates of which similarity has lowered, in calculating a final detection position from the corresponding positions detected with the use of partial templates.

In a specific processing example, an inclination indicating change over time is calculated with straight-line approximation, from most recent similarities (for example, 20 similarities) of chronologically disposed input images. Then, when the calculated inclination is smaller than a prescribed value (a negative value), the image processing apparatus relatively lowers a weight for a corresponding partial template.

As above, the image processing apparatus according to the present embodiment changes a weight in position search, for a plurality of partial templates constituting integrated template 18, based on change over time in stored similarity. In other words, the image processing apparatus according to the present embodiment chronologically obtains input images, stores for each partial template, a similarity at the time when corresponding positions are specified in each input image, and updates a weight map based on change over time in similarity for each partial template.

According to the present embodiment, when search accuracy of an integrated template generated in advance lowers due to variation in environment over time, such lowering can be detected and measures for improving search accuracy can be taken.

[G. Fifth Embodiment]

In the first embodiment described above, a processing example in which template candidate 16 is set with the use of image for template generation 12 obtained in advance, template candidate 16 is evaluated with the use of test image 14 obtained in advance, and optimal integrated template 18 constituted of a plurality of partial templates is generated has been described.

In contrast, a partial template to be employed as integrated template 18 may dynamically be determined. Namely, instead of selecting in advance a template candidate to be employed as integrated template 18 from among a plurality of template candidates 16, a plurality of template candidates 16 may be evaluated each time an input image is obtained, and a template candidate to be employed as a partial template for integrated template 18 may be determined each time based on a result of evaluation.

More specifically, as in the processing by calculation portion 160 shown in Fig. 4, input image 20 is subjected to matching with the use of each of template candidates 16, and a similarity included in a result of matching is evaluated. Then, a template candidate which can be employed as integrated template 18 is selected based on a similarity for each template candidate 16. Then, corresponding positions are calculated from a result of search in selected template candidate 16 (partial template).

According to a fifth embodiment, though a time period for operation longer than in other embodiments is required, an optimal partial template can be selected while a partial template to be employed as integrated template 18 is dynamically changed in each matching. Therefore, search accuracy can be maintained even when variation in environment takes place.

[H. Other Embodiments]

In the embodiments described above, an example in which RIPOC is adopted has been described as one example of template matching. In addition thereto or instead thereof, an algorithm method which can address even deviation in geometry including also a size can be adopted. For example, a matching method using Fourier-Mellin transform disclosed in Document 1 (Qin-Sheng Chen, "Symmetric Phase-Only Matched Filtering of Fourier-Mellin Transforms for Image Registration and Recognition," IEEE TRANSACTIONS ON PATTERN ANALYSIS AND MACHINE INTELLIGENCE, VOL. I6, NO. 12, DECEMBER 1994) may be adopted. According to this matching method, similarly to an amount of rotation between images obtained with RIPOC, information on a magnification (a size) between images can be obtained. Therefore, instead of or in addition to an amount of rotation between images in the embodiments described above, information on a magnification (a size) can be handled as position information.

Other than POC, as a matching algorithm making use of frequency information within an image, a matching method disclosed in Document 2 (Hitoshi KIYA, "Integration of Image Signal Processing and Image Pattern Recognition -- DCT Sign Only Correlation and Its Application", Tokyo Metropolitan University, Faculty of System Design, Workshop on Dynamic Image processing for Real Application, 2007 (2007. 3. 8) may be adopted.

[I. Advantages]

In the present embodiment, each of a plurality of template candidates is evaluated, then a partial template used for actual matching processing is determined, and an integrated template is constituted as an assembly of these template candidates to finally be employed. By generating the integrated template as the assembly of such partial templates, such a template as not including an unqualified region can be generated. Thus, robustness in template matching making use of frequency information (for example, phase-only correlation (POC)) can be improved. Namely, according to the present embodiment, a template not including an unqualified region can readily be generated.

When a template including an unqualified region is used in position detection making use of template matching making use of frequency information (for example, phase-only correlation (POC)), search accuracy significantly lowers due to change in frequency information. When a size of a template becomes smaller, low-frequency information is lost. Then, deterioration in search accuracy is likely and an area which can be searched also becomes narrower. In contrast, according to the present embodiment, a partial template (template candidate 16) obtained by coupling of sub regions resulting from division of a candidate region is employed. Therefore, a template including an area as wide as possible can be set while an unqualified region is eliminated, and search accuracy in matching processing or robustness can be improved. Low-frequency information included in an image can be made use of, which can bring about further improvement in search accuracy in matching processing or robustness.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

REFERENCE SIGNS LIST

1 system; 2 object; 3 belt conveyor; 10 camera; 12 image for template generation; 13 candidate region; 14 test image; 16 template candidate; 18 integrated template; 20 input image; 100 image processing apparatus; 102 CPU; 104 RAM; 106 ROM; 108 network interface; 110 auxiliary storage device; 112 template generation processing program; 114 template matching processing program; 120 display portion; 122 input portion; 124 memory card interface; 126 memory card; 128 camera interface; 130 bus; 150 image-for-template-generation obtaining portion; 152 test image obtaining portion; 154 candidate region setting portion; 156 candidate region division portion; 158 template candidate generation portion; 160 calculation portion; 161, 164 Fourier transform portion; 162, 165 logarithmic processing portion; 163, 166, 166 polar coordinate conversion portion; 167 first POC processing portion; 168 rotation amount correction portion; 169 second POC processing portion; 170 integrated template generation portion; 172 input image obtaining portion; 174 integrated template holding portion; and 176 position detection portion.

**Claims**

1. An image processing apparatus having a function to generate a template used for search for an object in an input image, comprising:

   a first image obtaining portion configured to obtain a first input image including the object;
   a second image obtaining portion configured to obtain a second input image including the object, in which position information of the object within the second input image has already been known;
   a template candidate setting portion configured to divide a candidate region which is set in the first input image so as to include the object into a plurality of sub regions and set a plurality of rectangular template candidates each consisting of a single sub region or a plurality of sub regions adjacent to one another;
   a calculation portion configured to perform processing for searching for the object using each template candidate in the second input image and calculate search accuracy of each template candidate based on a result of performed search processing; and
   a generation portion configured to select a plurality of partial templates from among the plurality of template candidates based on the search accuracy and a size of each template candidate to generate a set of selected partial templates as the template.

2. The image processing apparatus according to claim 1, wherein
   the calculation portion includes
   a frequency information calculation portion configured to calculate frequency information from each of each template candidate and a region corresponding to the template candidate set in the second input image, and
   a searching portion configured to perform processing for searching for the object based on the frequency information.

3. The image processing apparatus according to claim 1 or 2, wherein
   the generation portion includes
   a selection indicator calculation portion configured to calculate a selection indicator based on a similarity calculated in the search processing and a weight coefficient dependent on a size of a template candidate, and
   a selection portion configured to select as the partial template, a template candidate higher in the selection indicator calculated by the selection indicator calculation portion.

4. The image processing apparatus according to any one of claims 1 to 3, further comprising:

a third image obtaining portion configured to obtain a third input image to be searched for the object; and
an object searching portion configured to perform search processing using each of the plurality of partial templates on the third input image and output position information of the object in the third input image based on a result of search processing.

5. The image processing apparatus according to claim 4, further comprising:

a storage portion configured to store a similarity for each of the plurality of partial templates, which is calculated as a result of search processing by the searching portion over a plurality of the third input images; and
a weight changing portion configured to change a weight in the searching portion for the plurality of partial templates based on change over time in similarity stored in the storage portion.

6. The image processing apparatus according to any one of claims 1 to 5, wherein
the template candidate setting portion expands the candidate region and sets again a template candidate when the calculation portion fails to calculate effective search accuracy for any template candidate.

7. The image processing apparatus according to any one of claims 1 to 6, wherein
the template candidate setting portion changes a position of the candidate region and sets again a template candidate when the calculation portion fails to calculate effective search accuracy for any template candidate.

8. An image processing method of generating a template used for search for an object in an input image, comprising the steps of:

obtaining a first input image including the object;
obtaining a second input image including the object, in which position information of the object within the second input image has already been known;
dividing a candidate region which is set in the first input image so as to include the object into a plurality of sub regions and setting a plurality of rectangular template candidates each consisting of a single sub region or a plurality of sub regions adjacent to one another;
performing processing for searching for the object using each template candidate in the second input image and calculating search accuracy of each template candidate based on a result of performed search processing; and
selecting a plurality of partial templates from among the plurality of template candidates based on the search accuracy and a size of each template candidate to generate a set of selected partial templates as the template.

9. An image processing program for generating a template used for search for an object in an input image, causing a computer to perform the steps of:

obtaining a first input image including the object;
obtaining a second input image including the object, in which position information of the object within the second input image has already been known;
dividing a candidate region which is set in the first input image so as to include the object into a plurality of sub regions and setting a plurality of rectangular template candidates each consisting of a single sub region or a plurality of sub regions adjacent to one another;
performing processing for searching for the object using each template candidate in the second input image and calculating search accuracy of each template candidate based on a result of performed search processing; and
selecting a plurality of partial templates from among the plurality of template candidates based on the search accuracy and a size of each template candidate to generate a set of selected partial templates as the template.

FIG.1

POSITION
INFORMATION

FIG.2

CAMERA I/F — 128
CPU — 102
RAM — 104
ROM — 106
NETWORK I/F — 108
100
4
130

TEMPLATE GENERATION PROCESSING PROGRAM — 112
TEMPLATE MATCHING PROGRAM — 114
110

DISPLAY PORTION — 120
INPUT PORTION — 122
MEMORY CARD I/F — 124
126

IMAGE FOR TEMPLATE GENERATION — 12

INTEGRATED TEMPLATE — 18
TEST IMAGE — 14

FIG.3

# FIG.4

POSITION INFORMATION

FIG.5

128 × 128

13

32

32

FIG.6

FIG.7

FIG.8

FIG.9

PEAK VALUE･･･SIMILARITY BETWEEN IMAGES

PEAK POSITION･･･AMOUNT OF TRANSLATION
BETWEEN IMAGES

FIG.10

TEMPLATE MATCHING PROCESSING

S100
OBTAIN IMAGE FOR TEMPLATE
GENERATION AND TEST IMAGE

S102
SET CANDIDATE REGION (TEMPLATE REGION)
FOR IMAGE FOR TEMPLATE GENERATION

S104
DIVIDE CANDIDATE REGION SET FOR IMAGE
FOR TEMPLATE GENERATION INTO A
PLURALITY OF SUB REGIONS (BLOCKS)

S106
SET A PLURALITY OF TEMPLATE CANDIDATES
EACH CONSISTING OF SINGLE SUB REGION
OR A PLURALITY OF SUB REGIONS ADJACENT
TO ONE ANOTHER

S108
SELECT ONE OF THE PLURALITY
OF TEMPLATE CANDIDATES

S110
PERFORM MATCHING PROCESSING
USING SELECTED TEMPLATE
CANDIDATE FOR TEST IMAGE

S114
SELECT ONE OF TEMPLATE
CANDIDATES WHICH HAVE
NOT BEEN SELECTED

S112
HAVE ALL OF THE PLURALITY
OF SET TEMPLATE CANDIDATES
BEEN SELECTED ?

NO

YES

S116
CALCULATE SEARCH ACCURACY
OF EACH TEMPLATE CANDIDATE

S118
SELECT A PLURALITY OF PARTIAL TEMPLATES
BASED ON SEARCH ACCURACY AND SIZE AND
GENERATE INTEGRATED TEMPLATE BY INTEGRATING
SELECTED PARTIAL TEMPLATE CANDIDATES

END

FIG.11

```
        ┌─────────────────────────┐
        │   TEMPLATE MATCHING     │
        │       PROCESSING        │
        └─────────────────────────┘
                    │
                    ▼                      S200
   ┌─────────────────────────────────────┐
   │ OBTAIN INPUT IMAGE TO BE SUBJECTED  │
   │ TO MATCHING PROCESSING              │
   └─────────────────────────────────────┘
                    │
                    ▼                      S202
   ┌─────────────────────────────────────┐
   │ PERFORM MATCHING PROCESSING         │
   │ USING PARTIAL TEMPLATE INCLUDED     │
   │ IN INTEGRATED TEMPLATE, ON INPUT    │
   │ IMAGE                               │
   └─────────────────────────────────────┘
                    │
                    ▼                      S204
   ┌─────────────────────────────────────┐
   │ CALCULATE FINAL SEARCH RESULT BY    │
   │ INTEGRATING SEARCH RESULTS BASED    │
   │ ON PARTIAL TEMPLATE                 │
   └─────────────────────────────────────┘
                    │
                    ▼
        ┌─────────────────────────┐
        │          END            │
        └─────────────────────────┘
```

FIG.12

(a)        (b)

FIG.13

(a)　　　　　　　　　　　　　　(b)

FIG.14

TIME

MATCHING PROCESSING

## FIG.15

**EP 2 884 459 A1**

<table>
<tr><td colspan="3"><strong>INTERNATIONAL SEARCH REPORT</strong></td><td>International application No.<br>PCT/JP2013/071196</td></tr>
</table>

A. CLASSIFICATION OF SUBJECT MATTER
*G06T7/00(2006.01)i*

According to International Patent Classification (IPC) or to both national classification and IPC

B. FIELDS SEARCHED

Minimum documentation searched (classification system followed by classification symbols)
G06T7/00

Documentation searched other than minimum documentation to the extent that such documents are included in the fields searched

Jitsuyo Shinan Koho 1922–1996 Jitsuyo Shinan Toroku Koho 1996–2013
Kokai Jitsuyo Shinan Koho 1971–2013 Toroku Jitsuyo Shinan Koho 1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-5242 A (Canon Inc.), 05 January 2006 (05.01.2006), entire text; all drawings & US 2005/0281454 A1 | 1-9 |
| A | JP 2011-155492 A (Nikon Corp.), 11 August 2011 (11.08.2011), entire text; all drawings (Family: none) | 1-9 |
| A | Yuki HISHINUMA et al., "Phase Correlation For High Resolution Motion Video With Low Operation Cost", The Institute of Electronics, Information and Communication Engineers 2009 Nan Sogo Taikai Koen Ronbunshu, Joho System 2, 04 March 2009 (04.03.2009), page 3 | 1-9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
17 October, 2013 (17.10.13)

Date of mailing of the international search report
29 October, 2013 (29.10.13)

Name and mailing address of the ISA/
Japanese Patent Office

Authorized officer

Facsimile No.

Telephone No.

Form PCT/ISA/210 (second sheet) (July 2009)

33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6317406 A
- JP 6089343 A
- JP 10124667 A

**Non-patent literature cited in the description**

- **QIN-SHENG CHEN.** Symmetric Phase-Only Matched Filtering of Fourier-Mellin Transforms for Image Registration and Recognition. *IEEE TRANSACTIONS ON PATTERN ANALYSIS AND MACHINE INTELLIGENCE,* December 1994, vol. I6 (12

- **HITOSHI KIYA.** Integration of Image Signal Processing and Image Pattern Recognition -- DCT Sign Only Correlation and Its Application. *Tokyo Metropolitan University, Faculty of System Design, Workshop on Dynamic Image processing for Real Application,* 2007, vol. 3, 8